# EUROPÄISCHE PATENTSCHRIFT

(11) **EP 1 464 596 B1**
(45) Veröffentlichungstag und Bekanntmachung des Hinweises auf die Patenterteilung: **31.12.2008**
(21) Anmeldenummer: 04005719.2
(22) Anmeldetag: 10.03.2004
(51) Int. Cl.: B65G 47/90

(54) **Handhabungsgerät zum Umpositionieren von Teilen**
Handling gear for the transfer of pieces
Appareil de manipulation pour le transfert de pièces

(30) Priorität: 01.04.2003 DE 10314818
(43) Veröffentlichungstag der Anmeldung: 06.10.2004
(73) Patentinhaber: FESTO AG & Co. KG, 73734 Esslingen (DE)
(72) Erfinder: Feyrer, Thomas, 73732 Esslingen (DE); Thorwart, Gerhard, 70794 Filderstadt (DE); Armbruster, Rainer, 70794 Filderstadt (DE)
(74) Vertreter: Abel, Martin

(56) Entgegenhaltungen:
- WO-A-01/68490
- DE-B2- 2 642 490
- DE-U1- 29 618 418

## Beschreibung

Die Erfindung betrifft ein Handhabungsgerät zum Umpositionieren von Teilen, mit einem durch eine Antriebseinrichtung zu einer oszillierenden ersten Schwenkbewegung um eine ortsfeste erste Schwenkachse antreibbaren Schwenkarm, mit einem zum Tragen eines Greifers dienenden Handhabungsteil, das unter Ausführung einer zweiten Schwenkbewegung um eine ortsfeste zweite Schwenkachse verschwenkbar und außerdem unter Ausführung einer linearen Hubbewegung radial bezüglich der zweiten Schwenkachse verstellbar ist.

Ein aus der DE 29618418 U1 bekanntes Handhabungsgerät dieser Art wird zum Umpositionieren von Teilen verwendet, die an einer ersten Position aufgenommen und zu einer zweiten Position verlagert werden, wo sie, mit um 90° verdrehter Orientierung, abgesetzt werden. Das jeweils umzupositionierende Teil wird während des Umpositioniervorganges von einem Greifer gehalten, der an einem beweglichen Handhabungsteil des Handhabungsgerätes sitzt und zusammen mit diesem eine gewünschte Handhabungsbahn durchlaufen kann.

Bei dem Handhabungsgerät der DE 29618418 U1 ist der Handhabungsabschnitt über ein Drehgelenk mit dem Schwenkarm bewegungsgekoppelt. Zu jeder Zeit eines die Handhabungsbahn durchlaufenden Handhabungszyklus führt der Handhabungsabschnitt und somit der daran fixierte Greifer sich überlagernde schwenkende und translatorische Bewegungen aus. Bei vielen Handhabungsaufgaben, beispielsweise beim Umsetzen eines Stiftes zwischen zwei linearen Bohrungen, besteht jedoch die Notwendigkeit, dass der Greifer zum Aufnehmen und Absetzen des umzupositionierenden Teils eine rein lineare Bewegung ausführt. Hierfür ist das bekannte Handhabungsgerät nicht geeignet.

In der WO 01/68490 A1 wird zwar ein Handhabungsgerät beschrieben, bei dem ein mit einem Greifer bestücktes Handhabungsteil eine Handhabungsbahn durchlaufen kann, die über zwei lineare Endabschnitte verfügt, in denen das Handhabungsteil und somit auch der Greifer jeweils ausschließlich eine lineare Hubbewegung ausführt. Allerdings kann hier das Handhabungsteil beim Durchlaufen eines Handhabungszyklus seine Orientierung im Raum nicht verändern. Das Gerät eignet sich daher nicht, um die Ausrichtung eines umzupositionierenden Teils beim Umpositioniervorgang um beispielsweise 90° zu verändern.

Aus der DE 26 42 490 B2 geht eine Vorrichtung hervor, die ausgebildet ist, um Gegenstände mit einem vorbestimmten Abstand auf einen Aufnahmeförderer zu überführen. Die Vorrichtung ist mit einer Kette ausgestattet, die eine Mehrzahl von Saugnäpfen trägt, die sich horizontal verlagern lassen, um beliebige Gegenstände im Rahmen einer rein linearen Bewegung zwischen zwei Förderbändern umzusetzen. Zum Ansaugen der Gegenstände wird eine am betreffenden Saugnapf angeordnete Klappe geschlossen, die zum Absetzen des Gegenstandes wieder geöffnet wird, so dass der Gegenstand nach unten fällt.

Es ist die Aufgabe der vorliegenden Erfindung, ein Handhabungsgerät der eingangs genannten Art zu schaffen, mit dem sich Teile unter Veränderung ihrer Ausrichtung so umpositionieren lassen, dass sie mit einer rein linearen Bewegung aufnehmbar und absetzbar sind.

Gelöst wird diese Aufgabe bei einem die eingangs genannten Merkmale aufweisenden Handhabungsgerät durch eine sich zumindest ein Stück weit entlang des Umfanges der ersten Schwenkachse erstreckenden, zwei lineare Endabschnitte aufweisenden Bahnvorgabekurve, mit der das Handhabungsteil über einen Kurvenfolger in Führungseingriff steht, wobei der Kurvenfolger relativ zum Schwenkarm radial bezüglich dessen erster Schwenkachse bewegbar ist und der Schwenkarm bei seiner ersten Schwenkbewegung derart antriebsmäßig auf den Kurvenfolger einwirkt, dass sich dieser entlang der Bahnvorgabekurve verlagert und somit das Handhabungsteil pro Handhabungszyklus eine Handhabungsbahn durchläuft, die zwei lineare Endabschnitte aufweist, in denen das Handhabungsteil jeweils ausschließlich eine lineare Hubbewegung ausführt gemäß Anspruch 1.

Bei diesem Handhabungsgerät gestattet die vorhandene Kinematik die Realisierung von Handhabungsbahnen in einer Weise, dass ein umzupositionierendes Teil während des Umpositioniervorganges in seiner Ausrichtung verändert wird und zudem das Aufnehmen und Absetzen dieses Teils im Rahmen einer ausschließlich linearen Bewegung stattfindet. Der Verlauf der gewünschten Handhabungsbahn kann über die Gestaltung der Bahnvorgabekurve beeinflusst werden, um unterschiedlichen Umpositionieraufgaben Rechnung zu tragen. Es besteht insbesondere die Möglichkeit, die Bahnvorgabekurve so auszulegen, dass das Handhabungsteil während eines Handhabungszyklus zunächst eine rein lineare Hubbewegung in einer ersten Hubrichtung, anschließend eine allein schwenkende oder kombiniert schwenkend-translatorische Zwischenbewegung von beispielsweise 90° und schließlich erneut eine rein lineare Hubbewegung, nun allerdings mit bezüglich der ersten Hubbewegung entgegengesetzter Hubrichtung, ausführt.

Vorteilhafte Weiterbildungen der Erfindung gehen aus den Unteransprüchen hervor.

Wenn die beiden linearen Endabschnitte der Bahnvorgabekurve rechtwinkelig zueinander verlaufen, kann ein umzupositionierendes Teil in einer um 90° veränderten Ausrichtung an einer ersten Stelle aufgenommen und an einer zweiten Stelle abgesetzt werden.

Es ist zweckmäßig, wenn sich die Längsachsen der beiden linearen Endabschnitte der Bahnvorgabekurve in einem gemeinsamen Punkt treffen, der auf der zweiten Schwenkachse liegt.

Zweckmäßigerweise greift der Schwenkarm nicht unmittelbar am Kurvenfolger an, sondern an einem am Handhabungsteil angeordneten Mitnehmer, wobei der Mitnehmer in Richtung der ersten Schwenkbewegung mit dem Schwenkarm unter Herstellung einer Mitnahmeverbindung bewegungsgekoppelt ist, zugleich aber radial zur ersten Schwenkachse eine relative Beweglichkeit zwischen dem Mitnehmer und dem Schwenkarm vorliegt. Der Mitnehmer kann beispielsweise in einem radial orientierten Längsschlitz des Schwenkarmes geführt sein.

Bei einer kinematisch sehr einfachen Lösung liegen der Kurvenfolger und der Mitnehmer auf einer gemeinsamen Mitnahmeachse, die parallel zur ersten und zweiten Schwenkachse verläuft.

Beim Verlagern des Kurvenfolgers entlang der Bahnvorgabekurve wird angestrebt, dass der Kurvenfolger quer zur Verlagerungsrichtung spielfrei mit der Bahnvorgabekurve in Eingriff steht. Um dies zu gewährleisten, kann eine mit dem Schwenkarm mitschwenkende Beaufschlagungseinrichtung vorgesehen sein, die zwischen dem Schwenkarm und dem Kurvenfolger wirksam ist und die den Kurvenfolger ständig gegen eine Flanke der Bahnvorgabekurve vorspannt.

Bei einer besonders zweckmäßigen Ausführungsform ist das Handhabungsteil Bestandteil eines schwenkbeweglichen Handhabungsarmes, der zusätzlich zu dem Handhabungsteil auch noch ein Lagerungsteil aufweist. Zur Definition der zweiten Schwenkachse ist das Lagerungsteil ortsfest verschwenkbar gelagert, wobei das Handhabungsteil an dem Lagerungsteil ausschließlich linear verstellbar geführt ist, um die Achse der linearen Hubbewegung zu definieren. Die beim Durchlaufen der Handhabungsbahn auftretenden Schwenkbewegungen werden somit vom Handhabungsarm insgesamt ausgeführt, während die von den beiden linearen Endabschnitten der Bahnvorgabekurve definierten linearen Hubbewegungen ausschließlich vom Handhabungsteil, relativ zu dem stillstehenden Lagerungsteil, ausgeführt werden. Durch diese Entkopplung ist eine getrennte Ausführung der Schwenklagerungsmaßnahmen und der Linearführungsmaßnahmen möglich, was eine hohe Genauigkeit bei verschleißarmem Betrieb gewährleistet.

Bei einer möglichen Realisierungsform des Handhabungsgerätes verläuft die Bahnvorgabekurve zwischen der ersten und der zweiten Schwenkachse hindurch, wobei sich die erste Schwenkachse auf der Krümmungs-Innenseite und die zweite Schwenkachse auf der Krümmungs-Außenseite der Bahnvorgabekurve befindet. Aufgrund der hier auftretenden Hebelverhältnisse lässt sich die gewünschte Handhabungsbahn mit einer relativ kurzen Bahnvorgabekurve und mit einem relativ geringen Schwenkwinkel des Schwenkarmes realisieren.

Vor allem wenn Teile mit hohen Massen umzupositionieren sind oder ein am Handhabungsteil zu fixierender Greifer relativ schwer ist, empfiehlt sich eine Ausführungsform des Handhabungsgerätes, bei der die beiden Schwenkachsen auf der gleichen Seite der Bahnvorgabekurve liegen, wobei die erste Schwenkachse zwischen der Bahnvorgabekurve und der zweiten Schwenkachse platziert ist. Die erste Schwenkachse kann hierbei von der Bahnvorgabekurve annähernd umschlossen sein, wobei die zweite Schwenkachse in dem zwischen den beiden linearen Endabschnitten liegenden offenen Bereich der Bahnvorgabekurve liegt. Die Hebelverhältnisse sind bei dieser Variante tendenziell günstiger als bei der zuvor genannten, es ist jedoch eine vergleichsweise längere Bahnvorgabekurve erforderlich, sodass auch der Schwenkarm während eines Handhabungszyklus um einen größeren Schwenkwinkel verschwenkt wird.

Gegenüber einer Bauform, bei der der zwischen den beiden linearen Endabschnitten der Bahnvorgabekurve definierte Winkel, seien es 90° oder ein anderer Winkel, fest vorgegeben ist, ergeben sich Vorteile hinsichtlich der Variabilität der Einsatzmöglichkeiten, wenn der erwähnte Winkel variabel eingestellt werden kann. Besonders zweckmäßig ist hier eine Ausgestaltung, die voneinander unabhängige winkelmäßige Positionierungen der beiden linearen Endabschnitte ermöglichen. Das Einstellen eines jeweiligen Winkels geschieht vorzugsweise im Rahmen einer Schwenkbewegung, wobei das Schwenkzentrum auf der zweiten Schwenkachse liegt.

Nachfolgend wird die Erfindung anhand der beiliegenden Zeichnung näher erläutert. In dieser zeigen:
- Fig. 1: eine mögliche erste Bauform des erfindungsgemäßen Handhabungsgerätes in perspektivischer Darstellung,
- Fig. 2: das Handhabungsgerät aus Fig. 1 in einer Explosionsdarstellung,
- Fig. 3: das Handhabungsgerät aus Fig. 1 in einer Vorderansicht, wobei das Handhabungsteil eine Zwischenstellung einnimmt,
- Fig. 4: einen Schnitt durch die Anordnung aus Fig. 3 gemäß Schnittlinie A-A,
- Fig. 5 bis 11: den Bewegungsablauf bei der Durchführung eines Handhabungszyklus des Handhabungsgerätes der Fig. 1 bis 4,
- Fig. 12: eine weitere mögliche Ausführungsform des Handhabungsgerätes in einer perspektivischen Darstellung,
- Fig. 13: eine Explosionsdarstellung des Handhabungsgerätes aus Fig. 12,
- Fig. 14: eine Vorderansicht des Handhabungsgerätes aus Fig. 12,
- Fig. 15: einen Schnitt durch das Handhabungsgerät gemäß Schnittlinie B-B aus Fig. 14
- Fig. 16 bis 20: den beim Durchlaufen eines Handhabungszyklus auftretenden Bewegungsablauf bei dem Handhabungsgerät der Fig. 12 bis 15,
- Fig. 21: eine weitere vorteilhafte Ausführungsform des Handhabungsgerätes in einer perspektivischen Darstellung, und
- Fig. 22 und 23: jeweils eine Vorderansicht des Handhabungsgerätes der Figur 21 bei unterschiedlichen Winkelstellungen der linearen Endabschnitte der Bahnvorgabekurve.

Die in der Zeichnung abgebildeten Varianten des erfindungsgemäßen Handhabungsgerätes ermöglichen jeweils ein aufeinanderfolgendes Umpositionieren von Teilen beliebiger Art, insbesondere von Kleinteilen wie Schrauben, Bolzen oder sonstigen, eine gewisse Längserstreckung aufweisenden Teilen. In der Zeichnung ist ein solches umzupositionierendes Teil bei 2 strichpunktiert angedeutet.

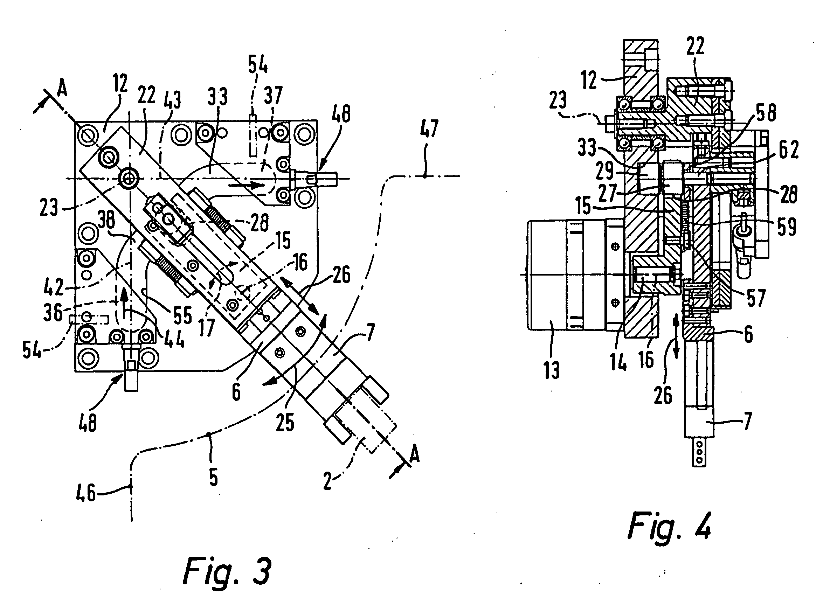

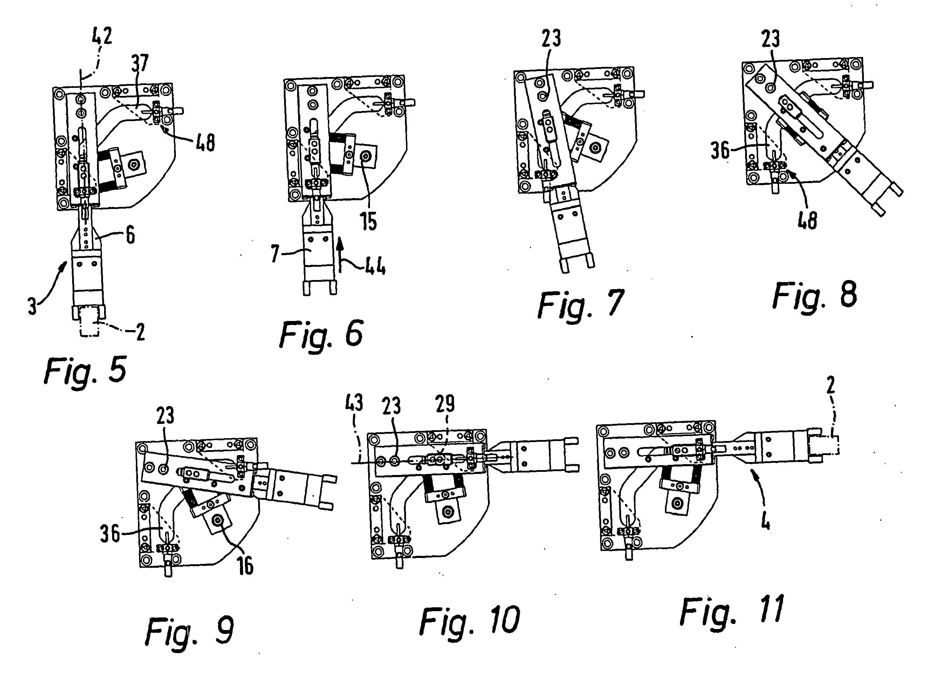

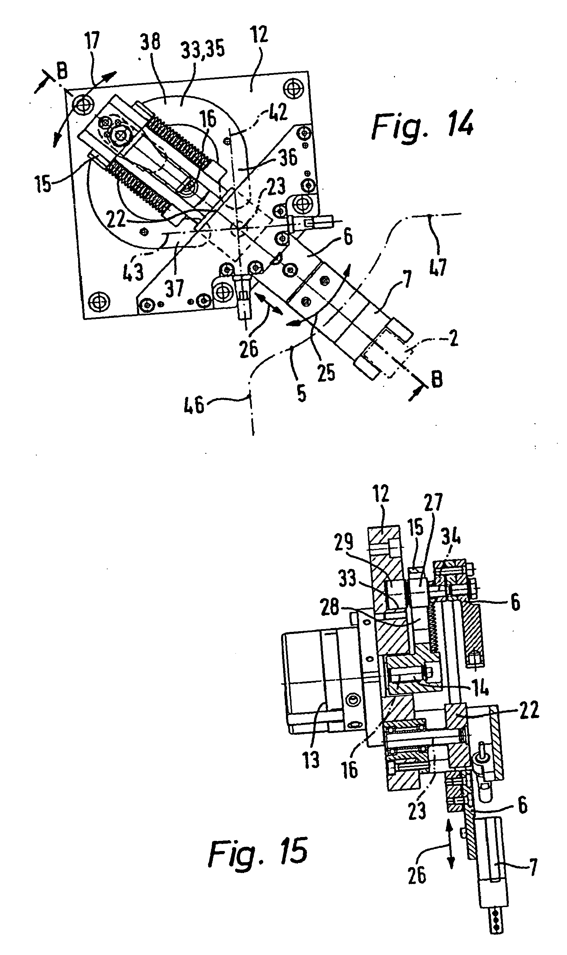

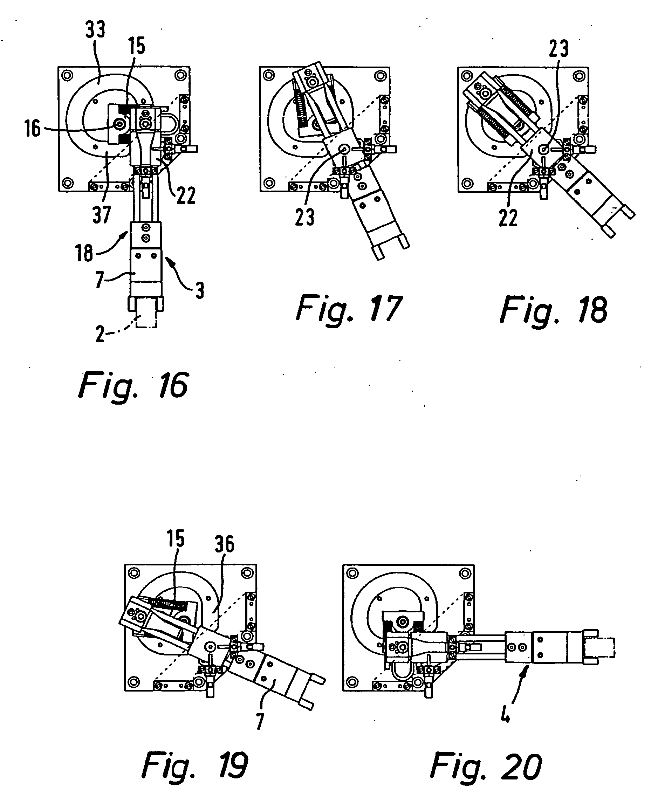

Die Handhabungsgeräte sind so ausgelegt, dass das Teil 2 während eines Umpositioniervorganges zwischen einer in Fig. 5 und 16 angedeuteten ersten Endposition 3 und einer in Fig. 11 und 20 angedeuteten zweiten Endposition 4 verlagerbar ist, wobei die dabei von ihm durchlaufene Bahnkurve dem Verlauf einer in Fig. 3 und 14 strichpunktiert angedeuteten Handhabungsbahn 5 entspricht, die ein angetriebenes Handhabungsteil 6 durchläuft, das mit einem zum lösbaren Halten des umzupositionierenden Teils 2 dienenden Greifer 7 einer geeigneten Bauart ausgestattet ist.

Bei dem Greifer 7 kann es sich beispielsweise um einen zangenartigen Greifer handeln, der über verschwenkbare oder parallel verschiebbare Greifbacken verfügt, die sich elektrisch oder bevorzugt durch Fluidkraft betätigen lassen, um ein Teil 2 nach Bedarf festzuhalten oder loszulassen. Weitere mögliche Ausführungsformen für den Greifer 7 wären beispielsweise Sauggreifer oder Magnetgreifer, die das handzuhabende Teil 2 durch Unterdruck oder durch Magnetkraft halten können.

Das Handhabungsgerät 1 enthält als Basis einen bevorzugt plattenförmigen Tragkörper 12, an den rückseitig eine insbesondere von einem einzigen fluidbetätigten Drehantrieb gebildete Antriebseinrichtung 13 angesetzt ist. Eine Antriebswelle 14 der Antriebseinrichtung 13 durchsetzt den Tragkörper 12 und trägt einen im Bereich der Vorderseite des Tragkörpers 12 angeordneten, radial von ihr wegragenden Schwenkarm 15. Der Drehantrieb könnte auch in elektrisch betätigter Bauweise ausgeführt sein.

Durch Aktivierung der Antriebseinrichtung 13 lässt sich die Antriebswelle 14 zu einer hin- und hergehenden Drehbewegung um ihre Längsachse antreiben, wobei diese Längsachse gleichzeitig eine erste Schwenkachse 16 bildet, bezüglich der der drehfest mit der Antriebswelle 14 verbundene Schwenkarm 15 somit zu einer oszillierenden ersten Schwenkbewegung 17 um die erste Schwenkachse 16 antreibbar ist.

Das Handhabungsteil 6 ist Bestandteil eines schwenkbeweglichen Handhabungsarmes 18. Dieser enthält neben dem Handhabungsteil 6 ein Lagerteil 22. Über das Lagerteil 22 ist der Handhabungsarm 18 um eine zweite Schwenkachse 23 verschwenkbar an dem Tragkörper 12 gelagert. Das Handhabungsteil 6 ist an dem Lagerteil 22 unter Vermittlung geeigneter Linearführungsmittel 24 - die beispielsweise unter anderem eine Führungsschiene oder mehrere Führungsstangen enthalten - in einer zu der zweiten Schwenkachse 23 radialen Richtung verstellbar gelagert.

Somit ist das Handhabungsteil 3 unter Ausführung einer zweiten Schwenkbewegung 25 um die ortsfeste zweite Schwenkachse 23 verschwenkbar und ist ferner, unter Ausführung einer linearen Hubbewegung 26, radial bezüglich der zweiten Schwenkachse 23 linear verschiebbar. Die zweite Schwenkbewegung 25 und die lineare Hubbewegung 26 können sich überlagern.

Das Handhabungsteil 6 ist mit dem Schwenkarm 15 antriebsmäßig gekoppelt, sodass es bei der ersten Schwenkbewegung 17 des Schwenkarmes 15 in einer vorbestimmten Weise mitbewegt wird. Die antriebsmäßige Kopplung ist realisiert durch einen an der dem Tragkörper 12 zugewandten Unterseite des Handhabungsteils 6 angeordneten Mitnehmer 27, der mit dem Schwenkarm 15 in Mitnahmeeingriff steht. In diesem Zusammenhang verfügt der Schwenkarm 15 über ein sich in seiner Längsrichtung erstreckendes, bezüglich der ersten Schwenkachse 16 radial verlaufendes Langloch 28, in das der Mitnehmer 27 eingreift. Wie aus Fig. 3 und 4 hervorgeht, kann das Langloch 28 an dem von der ersten Schwenkachse 16 wegweisenden äußeren Ende offen sein, sodass der Schwenkarm 15 eine gabelartige Formgebung aufweist.

Der Mitnehmer 27 kann ein am Handhabungsteil 6 drehbar gelagerter Rollenkörper sein, dessen Drehachse zu der ersten Schwenkachse 16 parallel verläuft.

Führt der Schwenkarm 15 eine erste Schwenkbewegung 17 aus, so wirkt die momentan in Schwenkrichtung orientierte Flanke des Langloches 28 auf den Mitnehmer 27 ein und nimmt das Handhabungsteil 6 mit.

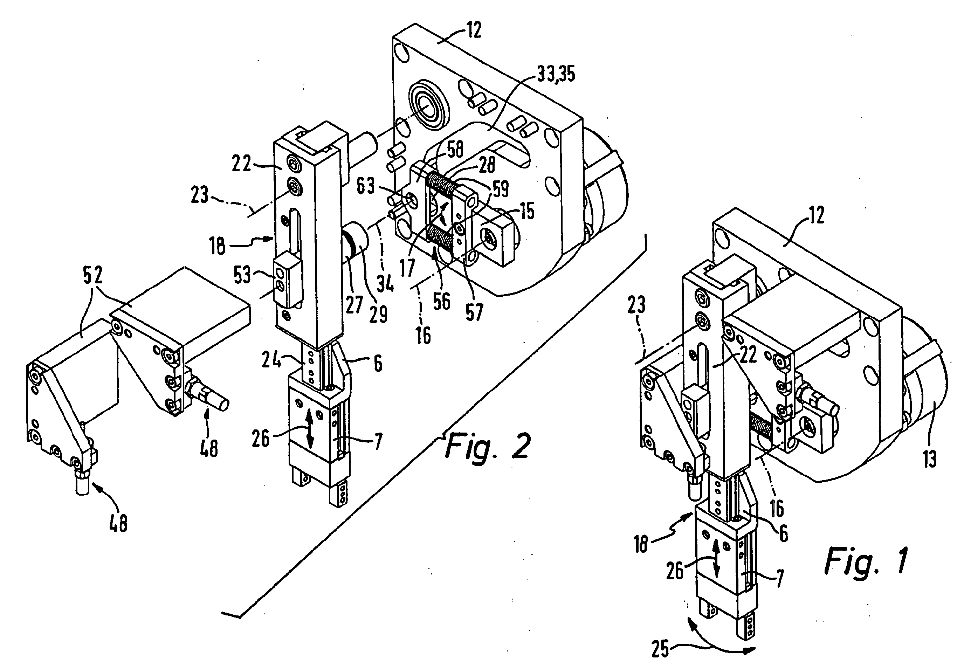

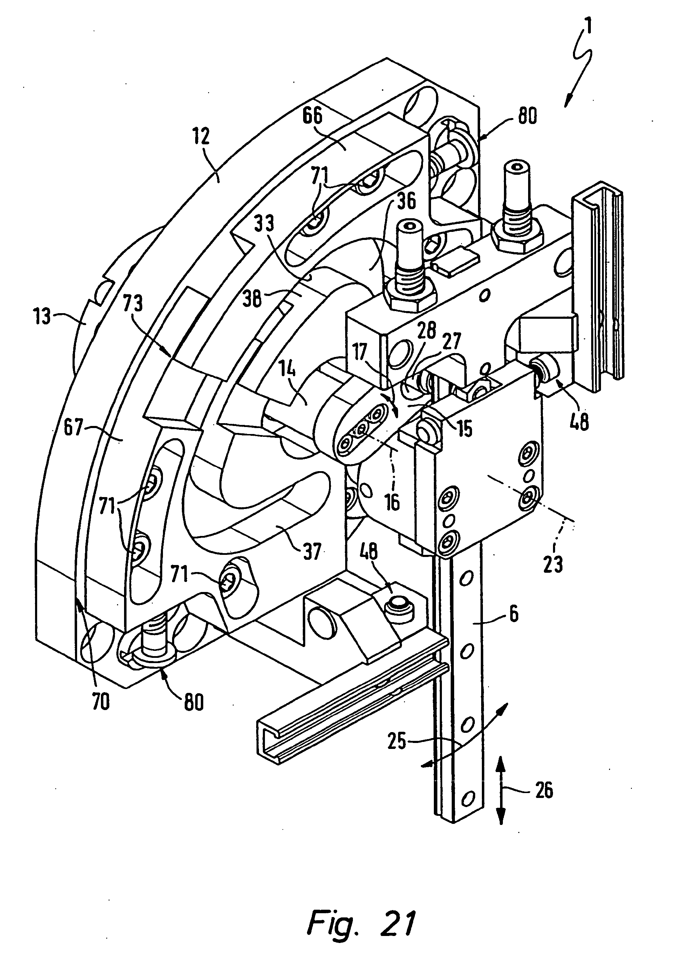

An dem Handhabungsteil 6 ist des Weiteren ein Kurvenfolger 29 angeordnet, der mit einer sich zumindest ein Stück weit entlang des Umfanges der ersten Schwenkachse 16 erstreckenden Bahnvorgabekurve 33 in Führungseingriff steht. Bevorzugt liegen der Mitnehmer 27 und der Kurvenfolger 29 aufeinanderfolgend auf einer gemeinsamen Mitnahmeachse 34, die zu den beiden Schwenkachsen 16, 23 parallel verläuft. Der Kurvenfolger 29 ist zweckmäßigerweise von einem wälzgelagerten Rollenkörper gebildet, der mit geringfügigem Spiel in einen die Bahnvorgabekurve 33 bildenden Längsschlitz 35 eingreift. Der Längsschlitz 35 und somit die Bahnvorgabekurve 33 befinden sich bei dem Ausführungsbeispiel der Figuren 1 bis 20 unmittelbar am Tragkörper 12, wobei der Kurvenfolger 29 dem Mitnehmer 27 zum Tragkörper 12 hin vorgelagert ist und in die Bahnvorgabekurve 33 eintaucht. Im Falle der Figuren 21 bis 23 ist die Bahnvorgabekurve 33 an separaten, am Tragkörper 12 fixierten Kurventrägern 66, 67 vorgesehen.

Wenn der Schwenkarm 15 durch die Antriebseinrichtung 13 verschwenkt wird, zieht er den fest am Handhabungsteil 6 angeordneten Mitnehmer 27 mit und verschiebt gleichzeitig den Kurvenfolger 29 entlang der Bahnvorgabekurve 33. Entsprechend dem Kurvenverlauf kann sich dabei der Abstand des Kurvenfolgers 29 von der ersten Schwenkachse 16 und von der zweiten Schwenkachse 23 verändern. Dementsprechend durchläuft das Handhabungsteil 6 die schon erwähnte Handhabungsbahn 5, wobei der Verlauf der Handhabungsbahn 5 von der Anordnung und dem Verlauf der Bahnvorgabekurve 33 abhängt.

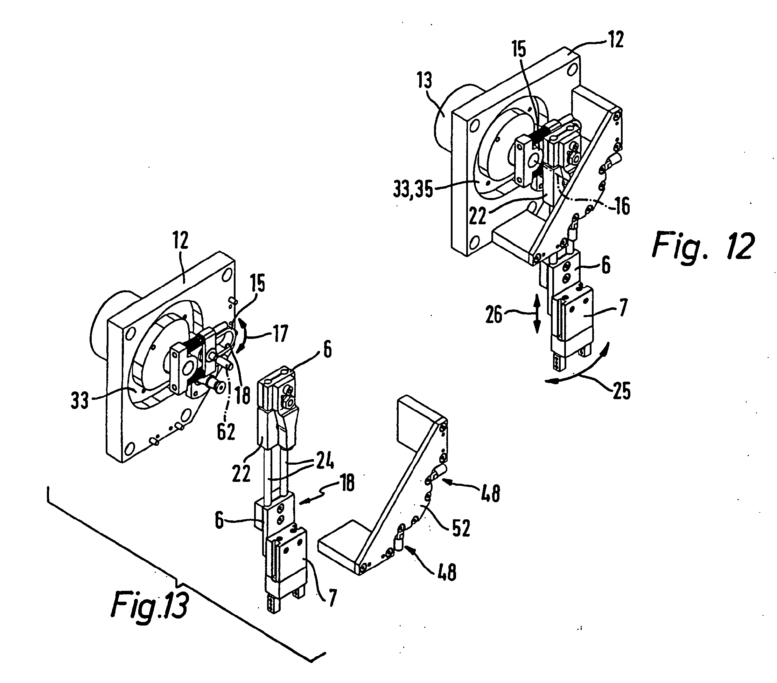

Die Bahnvorgabekurve 33 hat einen gekrümmten Längsverlauf und verfügt mit ihren beiden ersten und zweiten Endabschnitten 36, 37 über wenigstens zwei Längenabschnitte mit linearer Erstreckung. Die beiden Endabschnitte 36, 37 sind durch einen Zwischenabschnitt 38 miteinander verbunden, der beim Ausführungsbeispiel der Fig. 1 bis 11 ebenfalls einen linearen Verlauf hat und bei den Ausführungsbeispielen der Fig. 12 bis 20 und Fig. 21 bis 23 durchgehend bogenförmig verläuft. Im Falle der Figuren 21 bis 23 ändert sich die Bogenkrümmung über die Länge der Bahnvorgabekurve 33 zwischen den beiden Endabschnitten 36, 37.

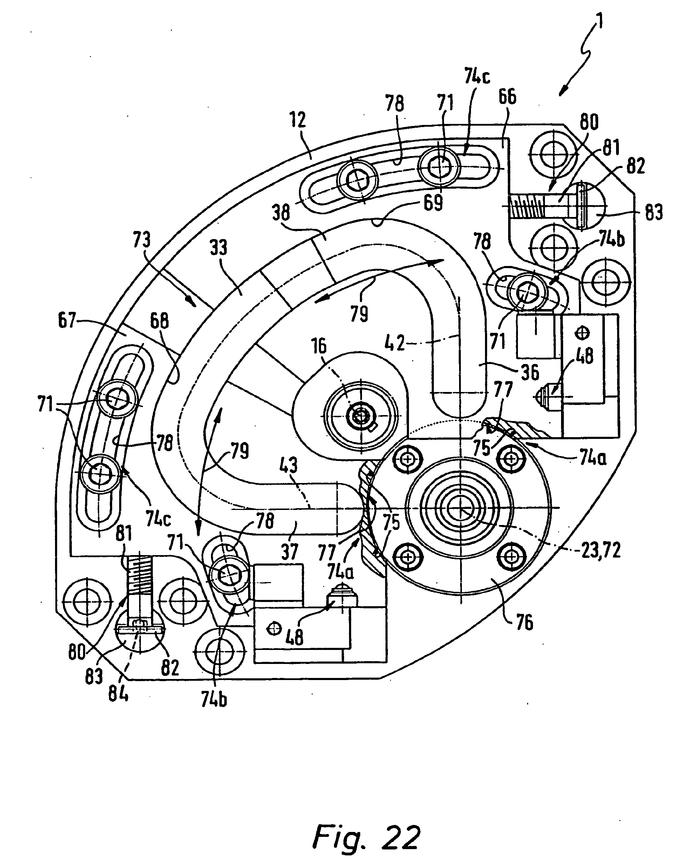

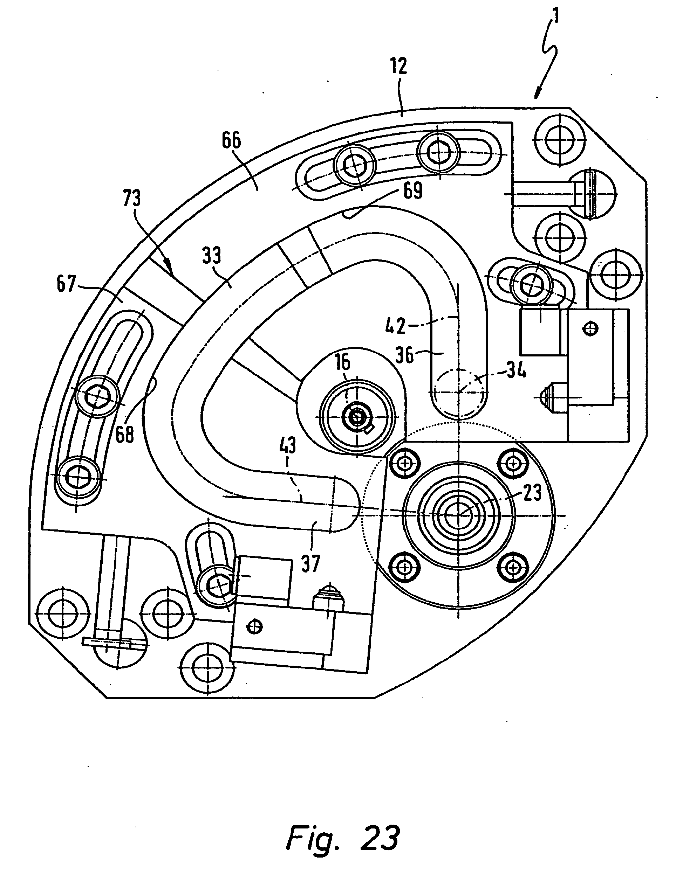

Bei den ersten beiden Ausführungsbeispielen verlaufen die linearen Endabschnitte 36, 37 rechtwinkelig zueinander, wobei sich ihre Längsachsen 42, 43 in einem gemeinsamen Punkt treffen, der mit der zweiten Schwenkachse 23 zusammenfällt. Der Winkel von 90° ist hier fest vorgegeben. Beim Ausführungsbeispiel der Figuren 21 bis 23 ist der Winkel zwischen den beiden Endabschnitten 36, 37 variabel einstellbar, wobei er exemplarisch in Figur 22 auf 90° und in Figur 23 auf ca. 85° eingestellt ist. Unabhängig vom eingestellten Winkel treffen sich die Längsachsen 42, 43 auch hier in einem gemeinsamen Punkt auf der zweiten Schwenkachse 23. Die Lage des Treffpunktes ist also unabhängig von der Winkeleinstellung konstant.

Beim Ausführungsbeispiel der Fig. 1 bis 11 verläuft die Bahnvorgabekurve 33 zwischen der ersten Schwenkachse 16 und der zweiten Schwenkachse 23 hindurch, wobei sich die erste Schwenkachse 16 auf der Krümmungs-Innenseite und die zweite Schwenkachse 23 auf der Krümmungs-Außenseite der Bahnvorgabekurve 33 befindet. Die geschlossenen Enden der linearen Endabschnitte 36, 37 weisen dabei von der zweiten Schwenkachse 23 weg. Bezogen auf die erste Schwenkachse 16 hat die Bahnvorgabekurve 33 eine Winkelerstreckung von etwa 120°.

Bei den Ausführungsbeispielen der Fig. 12 bis 20 und Fig. 21 bis 23 ist die erste Schwenkachse 16 jeweils zwischen der Bahnvorgabekurve 33 und der zweiten Schwenkachse 23 platziert. Beide Schwenkachsen 16, 23 liegen auf der Krümmungs-Innenseite der Bahnvorgabekurve 33. Verglichen mit dem anderen Ausführungsbeispiel ist die Bahnvorgabekurve hier um einiges länger, wobei sich die Winkelerstreckung um die erste Schwenkachse 16 herum in der Größenordnung von 270° bewegt. Während die erste Schwenkachse 16 in dem von der annähernd geschlossenen Bahnvorgabekurve 33 umgrenzten Innenbereich liegt, befindet sich die zweite Schwenkachse 23 in dem zwischen den beiden linearen Endabschnitten 36, 37 liegenden offenen Bereich der Bahnvorgabekurve 33, wobei die geschlossenen Enden dieser linearen Endabschnitte 36, 37 der zweiten Schwenkachse 23 zugewandt sind.

In der Ausgangsstellung des Handhabungsgerätes nimmt das Handhabungsteil 6 die in Fig. 5, 16 und 21 gezeigte erste Endposition ein. Der Kurvenfolger 29 befindet sich hier am äußeren Ende des ersten Endabschnittes 36 der Bahnvorgabekurve 33. Um einen Handhabungszyklus auszuführen, wird der Schwenkarm 15 durch die Antriebseinrichtung 13 zu einer unidirektionalen Schwenkbewegung angetrieben, wobei der Kurvenfolger 29 in der Bahnvorgabekurve 33 entlangläuft, bis er am geschlossenen Ende des zweiten Endabschnittes 37 der Bahnvorgabekurve 33 anlangt. Das Handhabungsteil 6 befindet sich nun in der in Fig. 11 und 20 gezeigten zweiten Endposition.

Die Fig. 5 bis 11 einerseits und die Fig. 16 bis 20 andererseits geben einzelne Momentaufnahmen eines Handhabungszyklus des in Fig. 1 bis 4 bzw. in Fig. 12 bis 15 abgebildeten Handhabungsgerätes wieder. Dabei finden im Wesentlichen folgende Abläufe statt:

Ausgehend von der ersten Endposition 3 verlagert sich der Kurvenfolger 29 zunächst linear entlang des ersten Endabschnittes 36, was aufgrund der in linearer Verlängerung des ersten Endabschnittes 36 platzierten zweiten Schwenkachse 23 zur Folge hat, dass der Handhabungsarm 18 und somit auch das Handhabungsteil 6 keine Schwenkbewegung ausführt. Das Lagerteil 22 befindet sich im Drehstillstand, und das Handhabungsteil 6 führt ausschließlich eine lineare Hubbewegung 26 in einer ersten Hubrichtung 44 aus, bis der Kurvenfolger 29 den Übergangsbereich zu dem sich anschließenden Zwischenabschnitt 38 der Bahnvorgabekurve 33 erreicht. Das Handhabungsteil 6 führt somit in dieser anfänglichen Bewegungsphase eine rein lineare Bewegung aus, die zur Folge hat, dass die Handhabungsbahn 5 in entsprechender Weise über einen ersten linearen Endabschnitt 46 verfügt. Durch diese Bewegungsphase kann beispielsweise ein umzupositionierendes Teil 2 aus einer es bereitstellenden Aufnahme herausgezogen werden. Der Endpunkt dieser ersten, rein linearen Bewegungsphase ist bezüglich des Ausführungsbeispiels der Fig. 1 bis 4 in Fig. 6 illustriert. In dem Ablaufschema der Fig. 15 bis 20 ist diese Phase nicht abgebildet.

In der nächsten Bewegungsphase durchläuft der von dem eine Schwenkbewegung ausführenden Schwenkarm 15 angetriebene Kurvenfolger 29 den Zwischenabschnitt 38 der Bahnvorgabekurve 33, wobei gemäß Fig. 7 bis 9 und Fig. 17 bis 19 der gesamte Handhabungsarm 18 um die Schwenkachse 23 herum verschwenkt wird. Entsprechend dem Längsverlauf des Zwischenabschnittes 38 kann das Handhabungsteil 6 hierbei seinen radialen Abstand zur zweiten Schwenkachse 23 unverändert beibehalten oder aber eine der Schwenkbewegung überlagerte lineare Hubbewegung 26 ausführen.

Diese Bewegungsphase ist abgeschlossen, wenn der Kurvenfolger 29 im Übergangsbereich zwischen dem Zwischenabschnitt 38 und dem zweiten Endabschnitt 37 der Bahnvorgabekurve 33 anlangt. Dieser Zwischenzustand ist in dem Ablaufschema der Fig. 16 bis 20 nicht gezeigt, geht jedoch aus Fig. 10 hervor. In dieser Zwischenposition liegt der Kurvenfolger 29 auf der die zweite Schwenkachse 23 treffenden Längsachse 43 des zweiten Endabschnittes 37 der Bahnvorgabekurve 33.

In der sich dann anschließenden letzten Bewegungsphase findet wiederum, wie schon in der anfänglichen Bewegungsphase, kein Verschwenken des Handhabungsarmes 18 und mithin des Handhabungsteils 6 statt. Während sich das Lagerteil 22 im Drehstillstand befindet, führt das Handhabungsteil 6 eine lineare Hubbewegung 26 aus, und zwar in einer zweiten Hubrichtung 45, die bezüglich der ersten Hubrichtung 44 entgegengesetzt ist. Während sich das Handhabungsteil 6 bei der Bewegung in der ersten Hubrichtung 44 an die zweite Schwenkachse 23 angenähert hat, bewegt es sich in der zweiten Hubrichtung 45 von der zweiten Schwenkachse 23 wieder weg.

Die Handhabungsbahn 5 verfügt auf diese Weise über einen wiederum ausschließlich linearen zweiten Endabschnitt 47. Diese abschließende Bewegungsphase ist dazu geeignet, das zuvor an der ersten Endposition 3 aufgenommene Teil 2 im Rahmen einer linearen Steckbewegung in die zweite Endposition 4 abzugeben.

Wird der Schwenkarm 15 anschließend mit umgekehrter Schwenkrichtung in die Ausgangsstellung zurückgeschwenkt, durchläuft das Handhabungsteil 6 die Handhabungsbahn 5 in gleicher Weise, jedoch mit umgekehrter Bewegungsrichtung.

Der zwischen den beiden linearen Endabschnitten 36, 37 eingeschlossene Winkel kann in Abhängigkeit vom Anwendungsfall ein von 90° abweichender anderer, unveränderlich vorgegebener Winkel sein. Eine solche Bauform bietet sich beispielsweise dann an, wenn die Bahnvorgabekurve 33 zur Reduzierung der Bauteileanzahl unmittelbar an dem Tragkörper 12 ausgebildet ist, beispielsweise vergleichbar den Figuren 1 bis 20. Besonders vorteilhaft ist jedoch die schon angesprochene Möglichkeit, den zwischen den Längsachsen 42, 43 der beiden linearen Endabschnitte 36, 37 definierten Winkel - insbesondere stufenlos - verändern zu können, wie dies beim Ausführungsbeispiel der Figuren 21 bis 23 in einer bevorzugten Ausführungsform realisiert ist.

Bei der Bauform gemäß Figuren 21 bis 23 befindet sich die Bahnvorgabekurve 33 an zwei insbesondere plattenartig ausgebildeten Kurventrägern 66, 67, die bezüglich dem für die ortsfeste Anordnung der ersten und der zweiten Schwenkachse 16, 23 verantwortlichen Tragkörper 12 verstellbar angeordnet sind, wobei jeder der beiden Kurventräger 66, 67 einen der beiden linearen Endabschnitte 36, 37 sowie einen Längenabschnitt 68, 69 des Zwischenabschnittes 38 trägt. Bevorzugt sind die Kurventräger 66, 67 an die dem Handhabungsarm 18 zugewandte Vorderfläche 70 des Tragkörpers 12 angesetzt und dort mittels Klemmschrauben 71 in der eingestellten Position lösbar bezüglich dem Tragkörper 12 fixiert.

Die beiden Kurventräger 66, 67 sind unabhängig voneinander um das gleiche Schwenkzentrum 72 verschwenkbar, wobei dieses Schwenkzentrum 72 auf der zweiten Schwenkachse 23 liegt und praktisch eine weitere Schwenkachse darstellt, die mit der zweiten Schwenkachse 23 zusammenfällt.

Auf diese Weise ist gewährleistet, dass sich die Lage des gemeinsamen Treffpunktes der beiden Längsachsen 42, 43 auf der zweiten Schwenkachse 23 ungeachtet der getroffenen Winkeleinstellung nicht verändert.

Durch entsprechendes Justieren von einem oder beiden Kurventrägern 66, 67 kann die Winkellage der beiden linearen Endabschnitte 46, 47 der gewünschten Handhabungsbahn 5 variiert werden. Dadurch kann beispielsweise dem Umstand Rechnung getragen werden, dass umzupositionierende Teile nicht selten in einer gewissen Schräglage herangefördert werden und dementsprechend die Aufnahme durch den Handhabungsarm einer gewissen Winkeladaption bedarf. Ferner kann man bei der Installation des Handhabungsgerätes eine sehr einfache Anpassung an die örtlichen Gegebenheiten vornehmen und insbesondere vorhandene Toleranzen ausgleichen.

Prinzipiell könnte das Handhabungsgerät so ausgeführt sein, dass nur einer der beiden linearen Endabschnitte der Bahnvorgabekurve relativ zum Trägkörper 12 winkelmäßig justierbar ist, während der andere eine konstante Lage einnimmt. Wesentlich variabler ist jedoch die Bauform des Ausführungsbeispiels, bei dem die beiden linearen Endabschnitte 36, 37 der Bahnvorgabekurve jeweils individuell und unabhängig vom jeweils anderen Endabschnitt durch entsprechende Justierung des zugeordneten Kurventrägers 66, 67 verstellbar sind.

Um dies zu realisieren, sind beim Ausführungsbeispiel die beiden Kurventräger 66, 67 jeweils über eigene Klemmschrauben 71 am Tragkörper 12 fixiert. Jeder Kurventräger 66, 67 kann, wenn die ihm zugeordneten Klemmschrauben 71 gelöst sind, um das Schwenkzentrum 72 auch dann verschwenkt werden, wenn der andere Kurventräger weiterhin bezüglich dem Tragkörper 12 festgespannt ist.

Die beiden Kurventräger 66, 67 sind insbesondere so ausgeführt, dass sie sich wenigstens im Bereich der Bahnvorgabekurve 33 in der Kurvenlängsrichtung überlappen. Der Überlappungsgrad hängt von der momentan eingenommenen Relativposition ab. Dabei ist unabhängig vom Überlappungsgrad ein ununterbrochener Verlauf der Bahnvorgabekurve 33 gewährleistet, es ändert sich praktisch nur die Länge des Zwischenabschnittes 38 aufgrund sich mehr oder weniger weit überlappender Längenabschnitte 68, 69. Der Überlappungsbereich der beiden Kurventräger 66, 67 ist bei 73 angedeutet.

Die Schwenklagerung der Kurventräger 66, 67 wird zweckmäßigerweise durch Kreisbogenführungsmittel 74a, 74b, 74c realisiert, deren Zentrum in dem Schwenkzentrum 72 liegt. Erste Kreisbogenführungsmittel 74a bestehen beim Ausführungsbeispiel aus einer kreisbogenförmig konvex konturierten Oberfläche 75 eines bevorzugt zylindrischen, zur Schwenkachse 23 koaxialen Befestigungsflansches 76, der an der Vorderfläche 70 des Tragkörpers 12 fixiert ist. An dieser Oberfläche 75 liegen komplementär konkav geformte kreisbogenförmige Führungsflächen 77 an, die an den beiden Kurventrägern 66, 67 ausgebildet sind und die an der Oberfläche 75 abgleiten können. Anstelle an dem Befestigungsflansch 76 könnte die Oberfläche 75 auch an einem anderen am Tragkörper 12 angeordneten Teil vorgesehen sein.

Die weiteren Kreisbogenführungsmittel 74b, 74c bestehen beim Ausführungsbeispiel aus die Kurventräger 66, 67 durchsetzenden kreisbogenförmigen Langlöchern 78, durch die die als Passschrauben ausgebildeten Klemmschrauben 71 hindurchgreifen, wobei sie sich mit ihrem Kopf an der Vorderseite des Kurventrägers 66, 67 abstützen und mit ihrem Gewindeschaft in den Tragkörper 12 eingeschraubt sind.

Sind die Klemmschrauben 71 eines Kurventrägers 66, 67 gelöst, kann der Kurventräger 66, 67 gemäß Doppelpfeilen 79 relativ zum Tragkörper 12 verschwenkt werden, wobei die Führungsflächen 77 an der Außenfläche 75 entlanggleiten.

Um den gewünschten Winkel fein einstellen zu können, ist den beiden Kurventrägern 66, 67 zweckmäßigerweise jeweils eine Einstellvorrichtung 80 zugeordnet. Diese umfasst beim Ausführungsbeispiel jeweils eine Einstellschraube 81, die parallel zur Schwenkebene verläuft und insbesondere in jeweils eine der beiden in Schwenkrichtung orientierten Stirnseiten der Kurventräger 66, 67 eingeschraubt ist. Gleichzeitig greift sie mit einem Anschlagbund 82 drehbeweglich in den Schlitz eines Haltekörpers 83 ein, der um eine zur zweiten Schwenkachse 23 parallele Drehachse verschwenkbar am Kurventräger 66, 67 fixiert ist.

Jede Einstellschraube 81 hat eine bevorzugt an dem Anschlagbund 82 vorgesehene Betätigungspartie 84, die das Ansetzen eines Schraubwerkzeuges gestattet. Wird bei gelösten Klemmschrauben 71 die zugeordnete Einstellschraube 81 verdreht, schraubt sich der betreffende Kurventräger 66, 67 relativ zu der sich am Haltekörper 83 abstützenden Einstellschraube 81 in der einen oder anderen Schwenkrichtung vor, wobei der drehbewegliche Haltekörper 83 der hierbei erforderlichen Winkeländerung der Einstellschraube 81 Rechnung trägt.

Um den Aufprall des Handhabungsteils 6 beim Erreichen der Endlagen abzuschwächen, sind den beiden linearen Endabschnitten 36, 37 der Bahnvorgabekurve 33 zweckmäßigerweise geeignete Stoßdämpfmittel 48 zugeordnet. Sie sitzen bei den Ausführungsbeispielen jeweils an einer Halterung 52, die an der Vorderseite des Tragkörpers 12 befestigt ist und die beim Ausführungsbeispiel der Fig. 21 bis 23 von den Kurventrägern 66, 67 gebildet ist. Die Stoßdämpfmittel 48 sind beispielsweise von hydraulischen Stoßdämpfern gebildet und parallel zu den Längsachsen 42, 43 der linearen Endabschnitte 36, 37 ausgerichtet, sodass das Handhabungsteil 6 gegen Ende der letzten Bewegungsphase auf sie auflaufen kann.

Beim Ausführungsbeispiel arbeiten die Stoßdämpfmittel 48 mit einem Anschlagteil 53 zusammen, das auf der Mitnahmeachse 34 platziert ist.

Seitlich neben einem oder beiden linearen Endabschnitten 36, 37 der Bahnvorgabekurve 33 können strichpunktiert angedeutete Anschlagmittel 54 vorgesehen sein, die sich am Tragkörper 12 abstützen und an denen das die Endlage einnehmende Lagerteil 22 seitlich anliegt. Diese Anschlagmittel 54 sind einstellbar, um zu erreichen, dass sie das Lagerteil in der Endlage in einer Weise beaufschlagen, dass der Kurvenfolger 29 an die jenseitige Flanke 55 der Bahnvorgabekurve 33 angedrückt wird. Die Anschlagmittel 54 sind zweckmäßigerweise der Krümmungs-Außenseite der Bahnvorgabekurve 33 zugeordnet, sodass der Kurvenfolger 29 an die der Krümmungs-Innenseite benachbarte innere Flanke der Bahnvorgabekurve 33 angedrückt wird. Der Handhabungsarm ist somit in der Endlage spielfrei präzise festgelegt.

Um einen spielfreien Bewegungsablauf auch bei der Bewegung zwischen den beiden Endlagen zu erhalten, ist es ferner von Vorteil, wenn der Schwenkarm 15 mit einer die Schwenkbewegung mitmachenden Beaufschlagungseinrichtung 56 ausgestattet ist, die zwischen dem Schwenkarm 15 und dem Kurvenfolger 29 wirksam ist und den Kurvenfolger 29 ständig gegen eine Flanke der Bahnvorgabekurve 33 vorspannt. Wiederum ist es zweckmäßigerweise die der Krümmungs-Innenseite benachbarte innere Flanke der Bahnvorgabekurve 33, gegen die der Kurvenfolger 29 in diesem Falle ständig vorgespannt wird.

Beim Ausführungsbeispiel besitzt die Beaufschlagungseinrichtung 56 ein am Schwenkarm 15 befestigtes Halteteil 57, ein dem Kurvenfolger 29 zugeordnetes, in der Längsrichtung des Schwenkarms 15 bewegliches Beaufschlagungsteil 58 und eine dazwischen agierende Zugfedereinrichtung 59.

Der Kurvenfolger 29 sitzt zusammen mit dem Mitnehmer 27 auf einer die Mitnahmeachse 34 definierenden, am Schwenkarm 15 befestigten Lagerachse 62, wobei die Lagerachse 62 durch ein Loch 63 des Beaufschlagungsteils 58 hindurchgreift und somit die Beaufschlagungskraft vom Beaufschlagungsteil 58 auf die Lagerachse 62 übertragen wird.

## Patentansprüche

1. Handhabungsgerät zum Umpositionieren von Teilen, mit einem durch eine Antriebseinrichtung (13) zu einer oszillierenden ersten Schwenkbewegung (17) um eine ortsfeste erste Schwenkachse (16) antreibbaren Schwenkarm (15), mit einem zum Tragen eines Greifers (7) dienenden Handhabungsteil (6), das unter Ausführung einer zweiten Schwenkbewegung (25) um eine ortsfeste zweite Schwenkachse (23) verschwenkbar und außerdem unter Ausführung einer linearen Hubbewegung (26) radial bezüglich der zweiten Schwenkachse (23) verstellbar ist, **gekennzeichnet durch** eine sich zumindest ein Stück weit entlang des Umfanges der ersten Schwenkachse (16) erstreckenden, zwei lineare Endabschnitte (36, 37) aufweisenden Bahnvorgabekurve (33), mit der das Handhabungsteil (6) über einen Kurvenfolger (29) in Führungseingriff steht, wobei der Kurvenfolger (29) relativ zum Schwenkarm (15) radial bezüglich dessen erster Schwenkachse (16) bewegbar ist und der Schwenkarm (15) bei seiner ersten Schwenkbewegung derart antriebsmäßig auf den Kurvenfolger (29) einwirkt, dass sich dieser entlang der Bahnvorgabekurve (33) verlagert und somit das Handhabungsteil (6) pro Handhabungszyklus eine Handhabungsbahn durchläuft, die zwei lineare Endabschnitte aufweist, in denen das Handhabungsteil (6) jeweils ausschließlich eine lineare Hubbewegung ausführt.

2. Handhabungsgerät nach Anspruch 1, **dadurch gekennzeichnet, dass** die beiden linearen Endabschnitte (36, 37) der Bahnvorgabekurve (33) rechtwinkelig zueinander verlaufen.

3. Handhabungsgerät nach Anspruch 1 oder 2, **dadurch gekennzeichnet, dass** sich die Längsachsen (42, 43) der beiden linearen Endabschnitte (36, 37) der Bahnvorgabekurve (33) in einem gemeinsamen Punkt auf der zweiten Schwenkachse (23) treffen.

4. Handhabungsgerät nach einem der Ansprüche 1 bis 3, **dadurch gekennzeichnet, dass** der Schwenkarm (15) zur antriebsmäßigen Einwirkung auf den Kurvenfolger (29) derart an einem am Handhabungsteil (6) angeordneten Mitnehmer (27) angreift, dass der Mitnehmer (27) in Richtung der ersten Schwenkbewegung (17) mit dem Schwenkarm (15) bewegungsgekoppelt ist, zugleich aber radial zur ersten Schwenkachse (16) relativ zu dem Schwenkarm (15) beweglich ist.

5. Handhabungsgerät nach Anspruch 4, **dadurch gekennzeichnet, dass** der Kurvenfolger (29) und der Mitnehmer (27) aufeinanderfolgend auf einer gemeinsamen, zur ersten und zweiten Schwenkachse (16, 23) parallelen Mitnahmeachse (34) liegen.

6. Handhabungsgerät nach einem der Ansprüche 1 bis 5, **gekennzeichnet durch** eine mit dem Schwenkarm (15) mitschwenkende Beaufschlagungseinrichtung (56), die zwischen dem Schwenkarm (15) und dem Kurvenfolger (29) wirksam ist und den Kurvenfolger (29) ständig gegen eine Flanke der Bahnvorgabekurve (33) vorspannt.

7. Handhabungsgerät nach einem der Ansprüche 1 bis 6, **dadurch gekennzeichnet, dass** das Handhabungsteil (6) Bestandteil eines schwenkbeweglichen Handhabungsarmes (18) ist, wobei der Handhabungsarm (18) zusätzlich ein zur Definition der zweiten Schwenkachse (23) verschwenkbar gelagertes Lagerteil (22) aufweist, an dem das Handhabungsteil (6) zur Definition der Achse der linearen Hubbewegung (26) linear verstellbar gelagert ist.

8. Handhabungsgerät nach Anspruch 7, **dadurch gekennzeichnet, dass** die Bahnvorgabekurve (33) schlitzartig ausgebildet ist und der Kurvenfolger (29) in die Bahnvorgabekurve (33) eintaucht, wobei seitlich neben mindestens einem der linearen Endabschnitte (36, 37) der Bahnvorgabekurve (33) Anschlagmittel (54) vorgesehen sind, an denen das die Endlage einnehmende Lagerteil (22) seitlich anliegt und die derart einstellbar sind, dass der Kurvenfolger (29) an die jenseitige Flanke (55) der Bahnvorgabekurve (33) angedrückt wird.

9. Handhabungsgerät nach einem der Ansprüche 1 bis 8, **gekennzeichnet durch** Stoßdämpfmittel (48), die den beiden linearen Endabschnitten (36, 37) der Bahnvorgabekurve (33) zugeordnet sind und mit dem Handhabungsteil (6) zusammenwirken, wenn dieses im Rahmen der linearen Hubbewegung (26) in die zugehörige Endlage fährt.

10. Handhabungsgerät nach einem der Ansprüche 1 bis 9, **dadurch gekennzeichnet, dass** die Bahnvorgabekurve (33) zwischen der ersten und zweiten Schwenkachse (16, 23) hindurch verläuft, wobei sich die erste Schwenkachse (16) auf der Krümmungs-Innenseite und die zweite Schwenkachse (23) auf der Krümmungs-Außenseite der Bahnvorgabekurve (33) befindet.

11. Handhabungsgerät nach einem der Ansprüche 1 bis 10, **dadurch gekennzeichnet, dass** die zweite Schwenkachse (23) in linearer Verlängerung der linearen Endabschnitte (36, 37) der Bahnvorgabekurve (33) platziert ist, wobei die linearen Endabschnitte (36, 37) mit ihren geschlossenen Enden von der zweiten Schwenkachse (23) wegweisen.

12. Handhabungsgerät nach einem der Ansprüche 1 bis 11, **dadurch gekennzeichnet, dass** die erste Schwenkachse (16) zwischen der Bahnvorgabekurve (33) und der zweiten Schwenkachse (23) platziert ist.

13. Handhabungsgerät nach einem der Ansprüche 1 bis 12, **dadurch gekennzeichnet, dass** die zweite Schwenkachse (23) in linearer Verlängerung der linearen Endabschnitte (36, 37) der Bahnvorgabekurve (33) platziert ist, wobei die linearen Endabschnitte (36, 37) mit ihren geschlossenen Enden zu der zweiten Schwenkachse (23) weisen.

14. Handhabungsgerät nach Anspruch 12 oder 13, **dadurch gekennzeichnet, dass** die erste Schwenkachse (16) von der Bahnvorgabekurve (33) annähernd umschlossen ist, wobei die zweite Schwenkachse (23) in dem zwischen den beiden linearen Endabschnitten (36, 37) liegenden offenen Bereich der Bahnvorgabekurve (33) angeordnet ist.

15. Handhabungsgerät nach einem der Ansprüche 1 bis 14, **dadurch gekennzeichnet, dass** der zwischen den beiden linearen Endabschnitten (36, 37) der Bahnvorgabekurve (33) gemessene Winkel variabel einstellbar ist.

16. Handhabungsgerät nach einem der Ansprüche 1 bis 15, **dadurch gekennzeichnet; dass** wenigstens einer und vorzugsweise jeder der beiden linearen Endabschnitte (36, 37) der Bahnvorgabekurve (33) um ein auf der zweiten Schwenkachse (23) liegendes Schwenkzentrum (72) relativ zum jeweils anderen linearen Endabschnitt verschwenkbar und in unterschiedlichen Winkelstellung positionierbar ist.

17. Handhabungsgerät nach Anspruch 16, **dadurch gekennzeichnet, dass** die Längsachsen (42, 43) der beiden linearen Endabschnitte (36, 37) der Bahnvorgabekurve (33) unabhängig von der momentan vorliegenden Winkeleinstellung mit der zweiten Schwenkachse (23) zusammentreffen.

18. Handhabungsgerät nach Anspruch 16 oder 17, **dadurch gekennzeichnet, dass** sich der verschwenkbare Endabschnitt (36, 37) der Bahnvorgabekurve (33) an einem Kurventräger (66, 67) befindet, der schwenkbeweglich an einem Tragkörper (12) angeordnet ist, bezüglich dem die erste und zweite Schwenkachse (16, 23) ortsfest angeordnet sind, wobei das Schwenkzentrum (72) zweckmäßigerweise auf der zweiten Schwenkachse (23) liegt.

19. Handhabungsgerät nach Anspruch 18, **dadurch gekennzeichnet, dass** die beiden linearen Endabschnitte (36, 37) der Bahnvorgabekurve (33) an getrennten, unabhängig voneinander bezüglich dem Tragkörper (12) verstellbaren Kurventrägern (66, 67) vorgesehen sind.

20. Handhabungsgerät nach Anspruch 18 oder 19, **gekennzeichnet durch** Kreisbogenführungsmittel (74a, 74b, 74c) zur Schwenklagerung des jeweiligen Kurventrägers (20) bezüglich dem Tragkörper (12).

## Claims

1. Handling device for repositioning components, with a swivelling arm (15) driven by a drive unit (13) to perform an oscillating first swivelling movement (17) about a stationary first pivot axis (16), with a handling part (6) supporting a gripper (7) and capable both of swivelling about a stationary second pivot axis (23) while performing a second swivelling movement (25) and of radial adjustment relative to the second pivot axis (23) while performing a linear stroking movement (26), **characterised by** a path presetting curve (33) extending along at least a section of the circumference of the first pivot axis (16) and having two linear end sections (36, 37), with which path presetting curve the handling part (6) is in guiding engagement via a curve follower (29), wherein the curve follower (29) is movable relative to the swivelling arm (15) in the radial direction relative to its first pivot axis (16), and wherein the swivelling arm (15) in its first swivelling movement acts on the curve follower (29) in a driving manner such that the latter is displaced along the path presetting curve (33) and the handling part (6) therefore in each handling cycle traverses a handling path with two linear end sections in each of which the handling part (6) performs an exclusively linear stroking movement.

2. Handling device according to claim 1, **characterised in that** the two linear end sections (36, 37) of the path presetting curve (33) extend at right angles to one another.

3. Handling device according to claim 1 or 2, **characterised in that** the longitudinal axes (42, 43) of the two linear end sections (36, 37) of the path presetting curve (33) meet at a common point on the second pivot axis (23).

4. Handling device according to any of claims 1 to 3, **characterised in that**, for acting in a driving manner on the curve follower (29), the swivelling arm (15) acts on a driver (27) provided on the handling part (6) such that the driver (27) is coupled for movement with the swivelling arm (15) in the direction of the first swivelling movement (17) while also being capable of radial movement relative to the first pivot axis (16) in relation to the swivelling arm (15).

5. Handling device according to claim 4, **characterised in that** the curve follower (29) and the driver (27) lie one behind the other on a common driving axis (34) parallel to the first and second pivot axes (16, 23).

6. Handling device according to any of claims 1 to 5, **characterised by** a pressurisation device (56) swivelling together with the swivelling arm (15), which is active between the swivelling arm (15) and the curve follower (29) and continuously preloads the curve follower (29) towards a flank of the path presetting curve (33).

7. Handling device according to any of claims 1 to 6, **characterised in that** the handling part (6) is a part of a pivotable handling arm (18), wherein the handling arm (18) additionally comprises a bearing part (22) pivotably mounted to define the second pivot axis (23), on which bearing part the handling part (6) is bearing-mounted for linear adjustment to define the axis of the linear stroking movement (26).

8. Handling device according to claim 7, **characterised in that** the path presetting curve (33) is designed as a slot and the curve follower (29) dips into the path presetting curve (33), wherein stop means (54), against which the bearing part (22) adopting its end position bears laterally and which are adjustable such that the curve follower (29) is pushed against the remote flank (55) of the path presetting curve (33), are provided at the side of at least one of the linear end sections (36, 37) of the path presetting curve (33).

9. Handling device according to any of claims 1 to 8, **characterised by** shock absorbing means (48), which are assigned to the two linear end sections (36, 37) of the path presetting curve (33) and which act together with the handling part (6) as it approaches its end position while performing the linear stroking movement (26).

10. Handling device according to any of claims 1 to 9, **characterised in that** the path presetting curve (33) passes between the first and second pivot axes (16, 23), the first pivot axis (16) lying on the inside of the curvature and the second pivot axis (23) lying on the outside of the curvature of the path presetting curve (33).

11. Handling device according to any of claims 1 to 10, **characterised in that** the second pivot axis (23) is placed in linear extension of the linear end sections (36, 37) of the path presetting curve (33), the closed ends of the linear end sections (36, 37) extending away from the second pivot axis (23).

12. Handling device according to any of claims 1 to 11, **characterised in that** the first pivot axis (16) is placed between the path presetting curve (33) and the second pivot axis (23).

13. Handling device according to any of claims 1 to 12, **characterised in that** the second pivot axis (23) is placed in linear extension of the linear end sections (36, 37) of the path presetting curve (33), the closed ends of the linear end sections (36, 37) extending towards the second pivot axis (23).

14. Handling device according to claim 12 or 13, **characterised in that** the first pivot axis (16) is nearly enclosed by the path presetting curve (33), the second pivot axis (23) being located in the open region of the path presetting curve (33) between the two linear end sections (36, 37).

15. Handling device according to any of claims 1 to 14, **characterised in that** the angle measured between the two linear end sections (36, 37) of the path presetting curve (33) is variably adjustable.

16. Handling device according to any of claims 1 to 15, **characterised in that** at least one and preferably both of the linear end sections (36, 37) of the path presetting curve (33) is/are capable of pivoting and of positioning in different angular positions relative to one another about a pivot (72) lying on the second pivot axis (23).

17. Handling device according to claim 16, **characterised in that** the longitudinal axes (42, 43) of the two linear end sections (36, 37) of the path presetting curve (33) meet the second pivot axis (23) independent of the current angular position.

18. Handling device according to claim 16 or 17, **characterised in that** the pivotable end section (36, 37) of the path presetting curve (33) is located on a curve support (66, 67) pivotably mounted on a support body (12), in relation to which the first and second pivot axes (16, 23) are in a fixed position, the pivot (72) expediently lying on the second pivot axis (23).

19. Handling device according to claim 18, **characterised in that** the two linear end sections (36, 37) of the path presetting curve (33) are provided on separate curve supports (66, 67), which are independently adjustable relative to the support body (12).

20. Handling device according to claim 18 or 19, **characterised by** circular arc guidance means (74a, 74b, 74c) for the pivotable mounting of the respective curve support (20) relative to the support body (12).

## Revendications

1. Dispositif de manipulation pour repositionner des pièces, comprenant un bras pivotant (15) pouvant être entraîné autour d'un premier axe de pivotement stationnaire (16) par un dispositif d'entraînement (13) en un premier mouvement pivotant oscillant, une partie de manipulation (6) servant à supporter une pince (7) et qui peut être amenée à pivoter autour d'un deuxième axe de pivotement stationnaire (23) en exécutant un deuxième mouvement pivotant (25) et qui peut en outre être décalée radialement par rapport au deuxième axe de pivotement (23) en exécutant un mouvement d'avance linéaire (26), **caractérisé par** une came de spécification de trajectoire (33) s'étendant au moins sur une certaine distance le long de la périphérie du premier axe de pivotement (16) et présentant deux segments d'extrémité linéaires (36, 37), la partie de manipulation (6) étant en engagement de guidage avec ladite came par l'intermédiaire d'une contre-came (29), la contre-came (29) pouvant être déplacée par rapport au bras pivotant (15) radialement par rapport au premier axe de pivotement (16) de celui-ci, et le bras de pivotement (15) agissant en entraînement lors de son premier mouvement pivotant sur la contre-came (29) de telle sorte que celle-ci se déplace le long de la came de spécification de trajectoire (33) et que la partie de manipulation (6) parcourt ainsi par cycle de manipulation une trajectoire de manipulation qui présente deux segments d'extrémité linéaires, dans lesquels la partie de manipulation (6) exécute à chaque fois exclusivement un mouvement d'avance linéaire.

2. Dispositif de manipulation selon la revendication 1, **caractérisé en ce que** les deux segments d'extrémité linéaires (36, 37) de la came de spécification de trajectoire (33) s'étendent de façon perpendiculaire l'un à l'autre.

3. Dispositif de manipulation selon la revendication 1 ou 2, **caractérisé en ce que** les axes longitudinaux (42, 43) des deux segments d'extrémité linéaires (36, 37) de la came de spécification de trajectoire (33) se rencontrent en un point commun sur le deuxième axe de pivotement (23).

4. Dispositif de manipulation selon l'une des revendications 1 à 3, **caractérisé en ce que** le bras pivotant (15) attaque pour une action en entraînement sur la contre-came (29) au niveau d'un élément d'entraînement (27) disposé sur la partie de manipulation (6) de telle sorte que l'élément d'entraînement (27) est couplé en mouvement avec le bras pivotant (15) dans la direction du premier mouvement pivotant (17), mais tout en étant mobile radialement par rapport au premier axe de pivotement (16) relativement au bras pivotant (15).

5. Dispositif de manipulation selon la revendication 4, **caractérisé en ce que** la contre-came (29) et l'élément d'entraînement (27) sont situés l'une derrière l'autre sur un axe d'entraînement (34) commun, parallèle aux premier et deuxième axes de pivotement (16, 23).

6. Dispositif de manipulation selon l'une des revendications 1 à 5, **caractérisé par** un dispositif de sollicitation (56) pivotant conjointement avec le bras pivotant (15) et agissant entre le bras pivotant (15) et la contre-came (29) et qui précontraint en permanence la contre-came (29) contre un flanc de la came de spécification de trajectoire (33).

7. Dispositif de manipulation selon l'une des revendications 1 à 6, **caractérisé en ce que** la partie de manipulation (6) fait partie d'un bras de manipulation (18) mobile en pivotement, le bras de pivotement (18) présentant de plus une partie de palier (22) montée de façon pivotante pour définir le deuxième axe de pivotement (23) et sur laquelle la partie de manipulation (6) est montée de façon à pouvoir être décalée linéairement pour définir l'axe du mouvement d'avance linéaire (26).

8. Dispositif de manipulation selon la revendication 7, **caractérisé en ce que** la came de spécification de trajectoire (33) est réalisée à la manière d'une fente et la contre-came (29) plonge dans la came de spécification de trajectoire (33), tandis que latéralement à côté d'au moins l'un des segments d'extrémité linéaires (36, 37) de la came de spécification de trajectoire (33) des moyens de butée (54) sont prévus contre lesquels la partie de palier (22) occupant la position d'extrémité s'applique latéralement et qui sont réglables de telle sorte que la contre-came (29) est pressée contre le flanc respectif (55) de la came de spécification de trajectoire (33).

9. Dispositif de manipulation selon l'une des revendications 1 à 8, **caractérisé par** des moyens d'amortissement (48) qui sont associés aux deux segments d'extrémité linéaires (36, 37) de la came de spécification de trajectoire (33) et coopèrent avec la partie de manipulation (6) lorsque celle-ci se déplace dans la position d'extrémité associée dans le cadre du mouvement d'avance linéaire (26).

10. Dispositif de manipulation selon l'une des revendications 1 à 9, **caractérisé en ce que** la came de spécification de trajectoire (33) s'étend entre les premier et deuxième axes de pivotement (16, 23), le premier axe de pivotement (16) se trouvant sur le côté intérieur de la courbure et le deuxième axe de pivotement (23) se trouvant sur le côté extérieur de la courbure de la came de spécification de trajectoire (33).

11. Dispositif de manipulation selon l'une des revendications 1 à 10, **caractérisé en ce que** le deuxième axe de pivotement (23) est placé dans le prolongement linéaire des segments d'extrémité linéaires (36, 37) de la came de spécification de trajectoire (33), les segments d'extrémité linéaires (36, 37) s'éloignant par leurs extrémités fermées du deuxième axe de pivotement (23).

12. Dispositif de manipulation selon l'une des revendications 1 à 11, **caractérisé en ce que** le premier axe de pivotement (16) est placé entre la came de spécification de trajectoire (33) et le deuxième axe de pivotement (23).

13. Dispositif de manipulation selon l'une des revendications 1 à 12, **caractérisé en ce que** le deuxième axe de pivotement (23) est placé dans le prolongement linéaire des segments d'extrémité linéaires (36, 37) de la came de spécification de trajectoire (33), les segments d'extrémité linéaires (36, 37) étant tournés avec leurs extrémités fermées vers le deuxième axe de pivotement (23).

14. Dispositif de manipulation selon la revendication 12 ou 13, **caractérisé en ce que** le premier axe de pivotement (16) est presque complètement entouré par la came de spécification de trajectoire (33), le deuxième axe de pivotement étant disposé dans la zone ouverte de la came de spécification de trajectoire (33) qui se trouve entre les deux segments d'extrémité linéaires (36, 37).

15. Dispositif de manipulation selon l'une des revendications 1 à 14, **caractérisé en ce que** l'angle mesuré entre les deux segments d'extrémité linéaires (36, 37) de la came de spécification de trajectoire (33) est réglable de façon variable.

16. Dispositif de manipulation selon l'une des revendications 1 à 15, **caractérisé en ce qu'**au moins l'un, et de préférence chacun des deux segments d'extrémité linéaires (36, 37) de la came de spécification de trajectoire (33) peut pivoter autour d'un centre de pivotement (72) se trouvant sur le deuxième axe de pivotement (23) par rapport respectivement à l'autre segment d'extrémité linéaire et peut être positionné dans des positions angulaires différentes.

17. Dispositif de manipulation selon la revendication 16, **caractérisé en ce que** les axes longitudinaux (42, 43) des deux segments d'extrémité linéaires (36, 37) de la came de spécification de trajectoire (33) intersectent le deuxième axe de pivotement (23), indépendamment du réglage angulaire actuellement donné.

18. Dispositif de manipulation selon la revendication 16 ou 17, **caractérisé en ce que** le segment d'extrémité pivotant (36, 37) de la came de spécification de trajectoire (33) se situe sur un support de came (66, 67) qui est monté de façon pivotante sur un corps de support (12), par rapport auquel les premier et deuxième axes de pivotement (16, 23) sont disposés de façon stationnaire, le centre de pivotement (72) se situant de façon avantageuse sur le deuxième axe de pivotement (23).

19. Dispositif de manipulation selon la revendication 18, **caractérisé en ce que** les deux segments d'extrémité linéaires (36, 37) de la came de spécification de trajectoire (33) sont prévus sur des supports de came (66, 67) séparés, réglables indépendamment l'un de l'autre par rapport au corps de support (12).

20. Dispositif de manipulation selon la revendication 18 ou 19, **caractérisé par** des moyens de guidage en arc de cercle (74a, 74b, 74c) pour le montage pivotant du support de came (20) respectif par rapport au corps de support (12).
